# EUROPÄISCHE PATENTSCHRIFT

(11) **EP 2 780 346 B1**
(45) Veröffentlichungstag und Bekanntmachung des Hinweises auf die Patenterteilung: **16.10.2019**
(21) Anmeldenummer: 12784274.8
(22) Anmeldetag: 14.11.2012
(51) Int. Cl.: C07F 5/02, C07F 5/04, H01M 10/0567

(54) **VERFAHREN ZUR HERSTELLUNG VON METALLDIFLUOROCHELATOBORATEN UND VERWENDUNG ALS BATTERIEELEKTROLYTE ODER ADDITIVE IN GALVANISCHEN ZELLEN**
PROCESS FOR PREPARING METAL DIFLUOROCHELATOBORATES AND USE AS BATTERY ELECTROLYTES OR ADDITIVES IN ELECTROCHEMICAL CELLS
PROCÉDÉ POUR LA PRODUCTION DE DIFLUORO-CHÉLATOBORATES DE MÉTAL ET LEUR UTILISATION COMME ÉLECTROLYTES DE BATTERIE OU ADDITIFS DANS DES CELLULES GALVANIQUES

(30) Priorität: 14.11.2011 DE 102011086306
(43) Veröffentlichungstag der Anmeldung: 24.09.2014
(73) Patentinhaber: Albemarle Germany GmbH, 65926 Frankfurt am Main (DE)
(72) Erfinder: WIETELMANN, Ulrich, 61381 Friedrichsdorf (DE); RITTMEYER, Peter, 65843 Sulzbach/Taunus (DE); EMMEL, Ute, 65929 Frankfurt am Main (DE)
(74) Vertreter: Rottmayer, Hans
(86) Internationale Anmeldenummer: PCT/EP2012/072603
(87) Internationale Veröffentlichungsnummer: WO 2013/072359

(56) Entgegenhaltungen:
- WO-A1-02/068432
- WO-A1-2010/094467
- US-B2- 6 849 752
- XUE Z-M ET AL: "A new lithium salt with dihydroxybenzene and lithium tetrafluoroborate for lithium battery electrolytes", JOURNAL OF POWER SOURCES, vol. 196, no. 20, 1 October 2011 (2011-10-01), pages 8710-8713, XP055578828, ISSN: 0378-7753, DOI: 10.1016/j.jpowsour.2011.06.060
- CHEN Z ET AL: "Lithium Difluoro(oxalato)borate as Salt for Lithium-Ion Batteries", ELECTROCHEMICAL AND SOLID-STATE LETTERS, vol. 10, no. 3, 2007, pages A45-A47, XP055578831, ISSN: 1099-0062, DOI: 10.1149/1.2409743
- ZHOU L ET AL: "Investigation of the Disproportionation Reactions and Equilibrium of Lithium Difluoro(Oxalato) Borate (LiDFOB)", ELECTROCHEMICAL AND SOLID-STATE LETTERS, vol. 14, no. 11, 2011, pages A161-A164, XP055578835, ISSN: 1099-0062, DOI: 10.1149/2.016111esl
- ZHANG S ET AL: "An unique lithium salt for the improved electrolyte of Li-ion battery", ELECTROCHEMISTRY COMMUNICATIONS, vol. 8, no. 9, 1 September 2006 (2006-09-01), pages 1423-1428, XP028041652, ISSN: 1388-2481, DOI: 10.1016/J.ELECOM.2006.06.016 [retrieved on 2006-09-01]
- SCHREINER C ET AL: "Chloride-Free Method to Synthesise New Ionic Liquids with Mixed Borate Anions", CHEMISTRY - A EUROPEAN JOURNAL, vol. 15, no. 10, 23 February 2009 (2009-02-23), pages 2270-2272, XP055017100, ISSN: 0947-6539, DOI: 10.1002/chem.200802243

## Beschreibung

Gegenstand der Erfindung ist ein Verfahren zur Herstellung von Metalldifluorochelatoboraten und deren Verwendung als Batterieelektrolyte oder Additive in galvanischen Zellen.

Mobile elektronische Geräte benötigen zur unabhängigen Stromversorgung immer leistungsfähigere wiederaufladbare Batterien. Neben Nickel/Cadmium- und Nickel/ Metallhydrid-Akkumulatoren sind für diese Zwecke insbesondere Lithiumbatterien geeignet, die im Vergleich zu den erstgenannten Systemen deutlich höhere Energiedichten aufweisen. Zukünftig sollen großformatige Lithiumakkumulatoren auch z.B. für stationäre Anwendungen (power back-up) sowie im Automobilbereich für Traktionszwecke (Hybridantriebe oder reinelektrischen Antrieb) eingesetzt werden. Insbesondere bei letztgenannten Anwendungen wird der Sicherheit eine überragende Bedeutung eingeräumt.

Die gegenwärtig in Benutzung befindliche Generation an Lithiumionenbatterien verwendet als Elektrolyt einen flüssigen, gelförmigen oder polymeren Elektrolyten mit LiPF₆ als Leitsalz. Dieses Salz beginnt sich bereits beim Überschreiten von ca. 70°C gemäß

LiPF₆ → LiF + PF₅ (1)

unter Bildung der hochreaktiven Lewissäure PF₅ zu zersetzen. Die Säure greift die nach Stand der Technik verwendeten organischen Bestandteile der Elektrolyte (z.B. Alkyl-Carbonate) an. Diese Reaktion ist exotherm und es kann zu einer "run away"-artigen Selbsterhitzung kommen. Auf diese Art und Weise wird mindestens die Funktionsfähigkeit der elektrochemischen Zelle beeinträchtigt oder aber es kommt zu einer völligen Zerstörung derselben unter gefährlichen Begleiterscheinungen.

Als Alternativelektrolyte wurden u.a. Lösungen von Lithiumsalzen mit Fluorochelatoboratanion, z. B. Lithiumdifluorooxalatoborat (LiDFOB) (US 6849752; Z. Chen, J. Liu, K. Amine, Electrochem. Solid State Lett.10 (2007) A45-47) oder Lithium-difluoro(1,2-benzene-diolato(2-)-O,O'-borat (X. Zhao-Ming, J. Power Sources 196 (2011) 8710) vorgeschlagen.

Die folgenden Ausführungen konzentrieren sich auf das Leitsalz LiDFOB. Sie gelten aber analog auch für Variationen dieser Struktur gemäß der allgemeinen Formel I 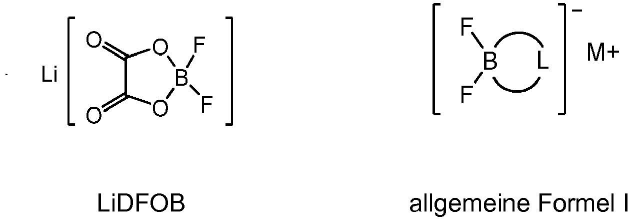 M⁺ ist ein einwertiges Kation, ausgewählt aus der Gruppe Lithium, Natrium, Kalium oder Ammonium NR₄⁺, wobei R = H, Alkyl (C1 bis C8, azyklisch oder zyklisch)
L ist ein Chelatbildner mit zwei endständigen Sauerstoffatomen mit der allgemeinen Formel 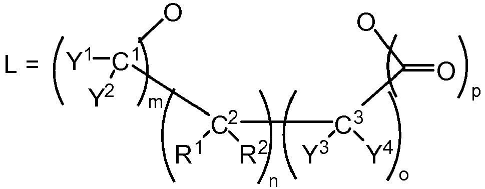 wobei gilt:
wenn m = 1 und Y¹ und Y² zusammen mit C¹ eine Carbonylgruppe bedeuten, sind n = 0 oder 1 und o = 0 oder 1 mit R¹ und R² unabhängig voneinander H oder Alkyl mit ein bis acht Kohlenstoffatomen (C1-C8) sowie Y³, Y⁴ jeweils unabhängig voneinander OR³ (R³ = C1-C8-Alkyl), dann gilt für n oder o ≠ 1: p = 0 oder 1 und für n und o = 0 gilt p = 1;
oder
Y¹, Y², Y³, Y⁴ bedeuten jeweils unabhängig voneinander OR³ (R³ = C1-C8-Alkyl), m = 1, n = 0 oder 1, o = 1 und p = 0;
oder
C² und C³ sind Glieder eines 5- oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei R¹, R², Y³ und Y⁴ entfallen, m = 0 oder im Falle von 1 bedeuten Y¹ und Y² zusammen mit C¹ eine Carbonylgruppe und p ist 0 oder 1.

Das Leitsalz LiDFOB (M⁺ = Li und L = C₂O₄²⁻) kann auf verschiedene Art und Weise hergestellt werden.

Bei der Umsetzung von Lithiumtetrafluoroborat (LiBF₄) mit 2 Equivalenten Lithiumhexafluoroisopropanolat in Acetonitril wird zunächst Lithiumfluorid (LiF) eliminiert (EP 1195834). Die nur relativ schwach gebundenen Alkoxy-Liganden des Zwischenproduktes werden in einem zweiten Schritt gegen den besseren Chelatdonor Oxalat ausgetauscht:

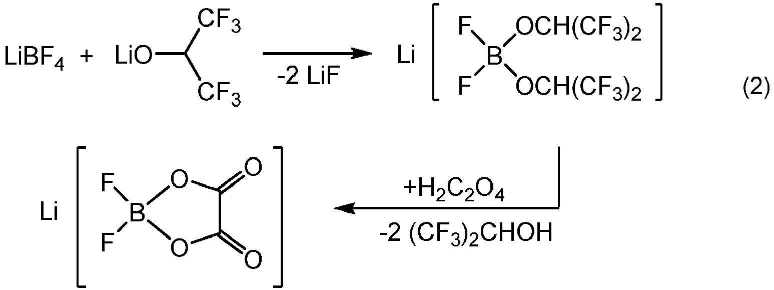

Nachteilig an diesem Verfahren ist, dass LiF im Produkt zurückbleibt, der Ligand 1,1,1,3,3,3-Hexafluoroisopropanol teuer und das Verfahren aufwändig, da zweistufig ist.

Bei einem weiteren Produktionsverfahren wird Lithiumtetrafluoroborat mit wasserfreier Oxalsäure und SiCl₄ als Hilfsreagenz umgesetzt (EP 1308449):

2LiBF₄ + 2H₂Ox + SiCl₄ → Li[F₂BOx] + 4HCl + SiF₄ (3)

Nachteilig an dieser Synthese ist die Bildung der sauren und giftigen Koppelprodukte SiF₄ und HCl: außerdem bleiben Chlorid-Spuren im Produkt. Es ist bekannt, dass sich Chlorid korrosiv gegenüber Aluminium verhält, so dass ein derartig Chloridverunreinigtes Leitsalz den in Li-Ionenbatterien verwendeten Kathodenstromsammler, in der Regel eine Aluminiumfolie, korrodiert.

Es ist weiterhin bekannt, dass sich bei der Warmlagerung äquimolarer Mischungen aus LiBF₄ und LiBOB in Ethylencarbonat/Ethylmethylcarbonat (EC/EMC) in einer sehr langsamen Reaktion LiDFOB bildet (B. Lucht, Electrochem. Solid-State Lett. 14 (11) A161-A164 (2011)). So wird das gemischte Salz LiDFOB bei 100°C-Lagerung innerhalb von 10 Wochen mit ca. 80%iger Ausbeute erhalten. Die Nachteile dieses Verfahrens bestehen darin, dass die Umsetzung für eine kommerzielle Nutzung wesentlich zu langsam ist und dass der Rohstoff LiBF₄ teuer ist.

Bei einem weiteren Verfahren wird Bortrifluorid, meist in Form eines Etheradduktes, mit Lithiumoxalat umgesetzt (S.S. Zhang, Electrochem. Commun. 8 (2006) 1423-28):

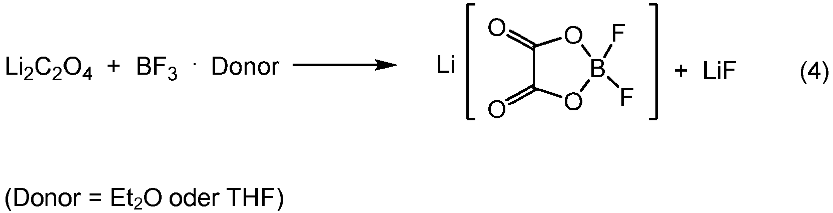

Nachteilig bei diesem Verfahren ist, dass das Zielprodukt LiDFOB nur mit einer Ausbeute von 50 % gebildet wird und in gleichem Maße LiBF₄ entsteht. Das gemäß Gleichung (Gl.) (4) entstehende Nebenprodukt LiF reagiert nämlich sofort mit Bortrifluorid zu LiBF₄, so dass in Summe folgende Reaktionsgleichung zutrifft:

Li₂C₂O₄ + 2BF₃ → Li[F₂BC₂O₄] + LiBF₄ (4a)

Schließlich kann LiDFOB aus Lithiumtetrafluoroborat und Bis(trimethylsilyl)oxalat in Acetonitrillösung hergestellt werden (C. Schreiner, M. Amereller, H. Gores, Chem. Eur. J. 13 (2009) 2270-2):

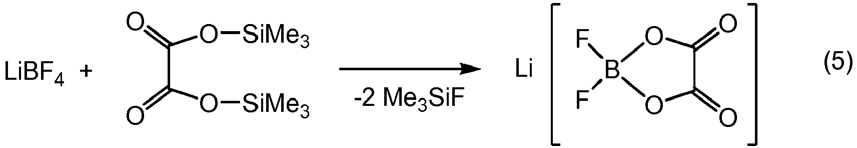

Nachteilig an diesem Verfahren sind die hohen Kosten und die Nichtverfügbarkeit des Silylesters sowie die Entstehung des Nebenproduktes Trimethylsilylfluorid.

Die Erfindung hat sich die Aufgabe gestellt ein Verfahren anzugeben, das ausgehend von industriell verfügbaren, gut handhabbaren Rohstoffen Metalldifluorochelatoborate, insbesondere LiDFOB in einer einstufigen, einfachen Reaktion bildet.

Die gestellte Aufgabe wird gelöst, indem ein Metall-*bis*(chelato)borat der Formel M[BL₂] mit Bortrifluorid sowie einem Metallfluorid (MF) und/oder einem Metallsalz des Chelatliganden (M₂L) mit M⁺, einem einwertigen Kation, ausgewählt aus der Gruppe Lithium, Natrium, Kalium oder Ammonium NR₄⁺, wobei R = H, Alkyl (C1 bis C8, azyklisch oder zyklisch) und

L einem Chelatbildner mit zwei endständigen Sauerstoffatomen mit der allgemeinen Formel 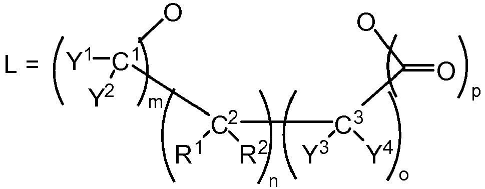 wobei gilt:
wenn m = 1 und Y¹ und Y² zusammen mit C¹ eine Carbonylgruppe bedeuten, sind n = 0 oder 1 und o = 0 oder 1 mit R¹ und R² unabhängig voneinander H oder Alkyl mit ein bis acht Kohlenstoffatomen (C1-C8) sowie Y³, Y⁴ jeweils unabhängig voneinander OR³ (R³ = C1-C8-Alkyl), dann gilt für n oder o ≠ 1: p = 0 oder 1 und für n und o = 0 gilt p = 1;
oder
Y¹, Y², Y³, Y⁴ bedeuten jeweils unabhängig voneinander OR³ (R³ = C1-C8-Alkyl), m = 1, n = 0 oder 1, o = 1 und p = 0;
oder
C² und C³ sind Glieder eines 5- oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei R¹, R², Y³ und Y⁴ entfallen, m = 0 oder im Falle von 1 bedeuten Y¹ und Y² zusammen mit C¹ eine Carbonylgruppe und p ist 0 oder 1, in einem organischen, aprotischen Lösungsmittel umgesetzt wird.

Die Reaktionen können durch folgende allgemeine Gleichungen beschrieben werden:

M₂L + M[BL₂] + 2BF₃ → 3M[F₂BL] (6)

MF + M[BL₂] + BF₃ → 2M[F₂BL] (7)

Für den Fall der Herstellung des besonders bevorzugten Leitsalzes LiDFOB wird Lithium *bis*(oxalato)borat ("LiBOB") mit Lithiumfluorid oder Lithiumoxalat und Bortrifluorid umgesetzt:

Li₂C₂O₄ + LiBOB + 2BF₃ → 3Li[F₂BC₂O₄] (8)

LiF + LiBOB + BF₃ → 2Li[F₂BC₂O₄] (9)

Analog wird das ebenfalls besonders bevorzugte Leitsalz Lithiumdifluoromalonatoborat (LiDFMB) aus Lithium-*bis*(malonato)borat und BF₃ swie LiF oder Lithiummalonat (Li₂C₃H₂O₄) hergestellt. Weitere bevorzugte Produkte sind: Lithiumdifluorolactatoborat, Lithiumdifluoroglycolatoborat, Lithiumdifluorosalicylatoborat, Lithiumdifluorobrenzcatechinatoborat sowie die entsprechenden Natriumsalze. Es werden aprotische, organische Lösemittel, bevorzugt Ether, Ester, Nitrile, Lactone, Carbonate, entweder in reiner Form oder in beliebiger Mischung eingesetzt. Zusätzlich können Kohlenwasserstoffe (Aromaten oder gesättigte Verbindungen) in Mischungen mit den vorgenannten funktionalisierten Lösungsmitteln eingesetzt werden.
Ganz besonders bevorzugt werden solche Lösungsmittel eingesetzt, die für die Verwendung in Lithiumbatterien geeignet sind. Dazu gehören: Kohlensäureester (Dimethylcarbonat, Diethylcarbonat, Ethylmethylcarbonat, Propylencarbonat, Ethylencarbonat), cyclische Ether wie Tetrahydropyran oder Tetrahydrofuran, Polyether wie 1,2-Dimethoxyethan oder Diethylenglykoldimethylether, ferner Nitrile wie Acetonitril, Adiponitril, Malodinitril, Glutaronitril sowie Lactone wie y-Butyrolacton.

Die Reaktion wird bei Temperaturen zwischen 0 und 250°C, bevorzugt 20 und 150°C und besonders bevorzugt zwischen 30 und 130°C durchgeführt.

Die schwerlöslichen Einsatzstoffe, also die Metallfluoride und/oder Metallchelatsalze, werden in pulverisierter Form, vorzugsweise vermahlen, eingesetzt. Bevorzugt liegt die mittlere Partikelgröße < 100 µm und besonders bevorzugt < 50 µm.
Alle Einsatzstoffe, insbesondere die Metallsalze und die Lösungsmittel werden in wasserfreier Form eingesetzt, d.h. die Wassergehalte der Rohstoffe liegen < 1000 ppm, bevorzugt < 300 ppm.

In einer besonders bevorzugten Ausführungsform wird ein Katalysator zur Reaktionsbeschleunigung eingesetzt. Als Katalysator dienen Lewis-Säuren oder Stoffe, die in der Reaktionsmischung Lewissäuren freizusetzen in der Lage sind. Bevorzugte Katalysatoren sind Elementverbindungen der 2. - 15. Gruppe des Periodensystems, besonders bevorzugt molekulare Halogenide, Perfluoroalkyle, Perfluoroaryle und Oxoverbindungen des Bors, Aluminiums und Phosphors. Beispiele sind: Aluminiumalkoholate (Al(OR)₃), Borsäureester (B(OR)₃), Phosphoroxide und Phosphorhalogenide. Ganz besonders bevorzugt sind supersaure Borverbindungen wie B(C₆F₅)₃ ("BARF"), C₆F₅BO₂C₆F₄ und Borsäureester dreiwertiger sauerstoffbasierter Chelatliganden wie z.B.

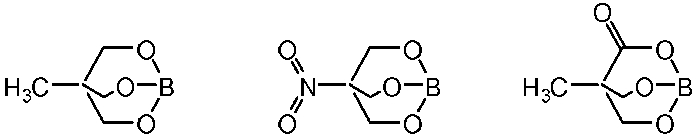

Ganz besonders bevorzugt ist weiterhin der katalytische Einsatz von LiPF₆, das bei den oben genannten Reaktionsbedingungen mit der starken Lewis-Säure PF₅ im Gleichgewicht steht (Gl. 1). Die genannten Katalysatoren werden in Mengen von höchstens 20 mol-%, bevorzugt bis 10 mol-% und besonders bevorzugt bis 5 mol-%, bezogen auf eingesetztes Bortrifluorid, verwendet.

Im Folgenden wird der erfindungsgemäße Prozess allgemein beschrieben. Im wasserfreien Lösungsmittel werden die Metallsalze vorgelegt. Unter Rühren wird dann Bortrifluorid entweder im gasförmigen Zustand eingeleitet oder einkondensiert oder in Form der handelsüblichen Solvatkomplexe, beispielsweise als BF₃ x Diethylether, BF₃ x THF oder BF₃ x Acetonitril zudosiert. Besonders bevorzugt ist der Einsatz von gasförmigem BF₃ oder einer vorher mit BF₃-Gas hergestellten Lösung im gewünschten Lösungsmittel (z.B. einem Carbonat wie Dimethylcarbonat oder Propylencarbonat). Dadurch wird der Eintrag eines in Batterieelektrolyten unüblichen oder sogar störenden Lösemittels wie Diethylether vermieden. Die BF₃-Zudosierung erfolgt im Temperaturbereich zwischen 0°C und 150°C, bevorzugt zwischen 10 und 100°C. Nach vollständiger Zugabe des BF₃ wird so lange gerührt, bis die Umsetzung vollständig abgelaufen ist. Der Reaktionsfortschritt lässt sich z.B. durch ¹¹B-NMR-Messungen bequem verfolgen.

Der erfindungsgemäße Prozess kann auch geringfügig von der theoretischen Stöchiometrie (Gl. 6 - 9) abweichen. Bevorzugt werden die Stöchiometrien gewählt, die zu einem vollständigen Verbrauch des in der Batterie störenden Rohstoffs BF₃ führen. Dazu werden die Metallsalze MF und/oder M₂L im Überschuss eingesetzt. Bevorzugt werden die genannten Metallsalze mit 0,1 bis 100 Gew.-% Überschuss eingesetzt, besonders bevorzugt mit 1 bis 20 Gew.-%.

Nach vollständiger Reaktion wird die Reaktionslösung klarfiltriert (z.B. Membranfiltration). Sie ist als solche dann direkt als Batterieelektrolyt oder Additiv verwendbar, wenn keine die Batterieperformance störenden Lösungsmittel eingesetzt wurden. Falls störende Lösungsmittel enthalten sein sollten, wird das synthetisierte erfindungsgemäße Metalldifluorochelatoborat durch einen Eindampf- oder Kristallisationsprozess in reiner Form gewonnen.

Die Erfindung wird anhand der nachfolgenden 7 Beispiele erläutert.

### Beispiel 1: Herstellung von LiDFOB aus LiBOB, Lithiumoxalat und BF₃ in Dimethylcarbonat (DMC)

In einem 0,5-L-Doppelmantelreaktor ausgestattet mit Rückflusskühler und Tropftrichter wurden 37,5 g LiBOB und 19,8 g Li₂C₂O₄ in 229 g wasserfreiem DMC vorgelegt und auf eine Innentemperatur von 70°C erwärmt. Dann wurden innerhalb einer Stunde 55,0 g Bortrifluorid-Etherat zudosiert. Die Manteltemperatur wurde so eingestellt, dass die Reaktionsmischung die ganze Zeit schwach siedete. Nach Dosierende wurde weiter refluxiert und von Zeit zu Zeit wurden Proben entnommen. Die Proben wurden per ¹¹B-NMR auf Reaktionsfortschritt geprüft:

| Zeitpunkt der Probennahme | -1,1 ppm* LiBF₄ | 0 ppm* BF₃ | 3,1 ppm* LiDFOB | 7,6 ppm* LiBOB |
|---|---|---|---|---|
| Dosierende | 41,5 | 4,7 | 42,9 | 10,8 |
| 2 h Nachreaktion | 43,0 | 3,0 | 45,9 | 8,2 |
| 7,5 h Nachreaktion | 37,8 | 3,9 | 47,6 | 10,7 |
| 9 h Nachreaktion | 36,9 | 2,9 | 48,4 | 11,8 |
| 11,5 h Nachreaktion | 37,7 | 2,6 | 55,3 | 4,5 |
| 18,5 h Nachreaktion | 17,6 | 2,2 | 66,7 | 13,6 |
| 26 h Nachreaktion | 9,2 | 1,9 | 78,9 | 8,9 |
| 30 h Nachreaktion | 8,8 | 2,1 | 81,4 | 7,7 |

| | | | | |
|---|---|---|---|---|
| * angegeben ist die chemische Verschiebung des jeweiligen Produkts im ¹¹B-NMR-Spektrum | | | | |

Nach einer 30-stündigen Reaktionszeit waren > 80 % d. Th. an LiDFOB gebildet und die Zusammensetzung änderte sich bei weiterem Rühren nicht mehr signifikant. Es hat sich somit eine thermodynamisch bedingte Gleichgewichtsmischung gebildet. Die Reaktionsmischung wurde filtriert und in dieser Form (klare Lösung) als Elektrolyt für Lithiumbatterien verwendet.

### Beispiel 2: Herstellung von LiDFOB aus LiBOB, Lithiumoxalat und BF₃ in Dimethylcarbonat (DMC), 5 mol-% Katalysator LiPF₆

In einem inertisierten GC-Septumglas mit Magnetrührkern wurden 1,50 g LiBOB und 0,91 g Lithiumoxalat in 9,16 g DMC gelöst bzw. suspendiert und 0,59 g einer 10 %igen LiPF₆-Lösung in DMC zugegeben. Zur gerührten Suspension wurden 2,20 g Bortrifluorid-Etherat zugespritzt und dann auf 70°C erwärmt. In bestimmten zeitlichen Abständen wurden Proben entnommen und per ¹¹B-NMR auf Reaktionsfortschritt geprüft:

| Zeitpunkt der Probennahme | -1,1 ppm* LiBF₄ | 0 ppm* BF₃ | 3,1 ppm* LiDFOB | 7,6 ppm* LiBOB |
|---|---|---|---|---|
| 1 h 70°C | 41,5 | 0,5 | 46 | 8 |
| 5 h 70°C | 16 | 1,1 | 72 | 11 |
| 12 h 70°C | 14 | 1,0 | 79 | 6 |

| | | | | |
|---|---|---|---|---|
| * angegeben ist die chemische Verschiebung des jeweiligen Produkts im ¹¹B-NMR-Spektrum | | | | |

### Beispiel 3: Herstellung von LiDFOB aus LiBOB, Lithiumoxalat und BF₃ in Propylencarbonat (PC), ohne und mit 5 mol-% Katalysator LiPF₆

In zwei inertisierten GC-Septumgläsern mit Magnetrührkern wurden jeweils 1,50 g LiBOB und 0,79 g Lithiumoxalat in 9,2 g PC gelöst bzw. suspendiert. In eines der Gläschen wurden 0,59 g einer 10%igen Lösung von LiPF₆ in PC zugespritzt. Zu den gerührten Suspensionen wurden jeweils 2,20 g Bortrifluorid-Etherat zugespritzt und dann auf 70°C erwärmt. In bestimmten zeitlichen Abständen wurden Proben entnommen und per ¹¹B-NMR auf Reaktionsfortschritt geprüft:

| Rektionszeit 70 °C (h) | LiBF₄ | | LiDFOB | | LiBOB | |
|---|---|---|---|---|---|---|
| | ohne Kat. | mit Kat. | ohne Kat. | mit Kat. | ohne Kat. | mit Kat. |
| 1 h | 32 | 22 | 40 | 62 | 28 | 16 |
| 2 h | 31 | 18 | 41 | 71 | 27 | 11 |
| 9h | 28 | 10 | 54 | 83 | 18 | 6 |

### Beispiel 4: Herstellung von LiDFOB aus LiBOB, Lithiumfluorid und BF₃ in Propylencarbonat (PC) mit 5 mol-% Katalysator LiPF₆

In einem inertisierten GC-Septumglas mit Magnetrührkern wurden 1,50 g LiBOB und 0,23 g gemahlenes Lithiumfluorid in 6,8 g PC gelöst bzw. suspendiert und 0,59 g einer 10 %igen LiPF₆-Lösung in PC zugegeben. Zur gerührten Suspension wurden 1,10 g Bortrifluorid-Etherat zugespritzt und dann auf 70°C erwärmt. In bestimmten zeitlichen Abständen wurden Proben entnommen und per ¹¹B-NMR auf Reaktionsfortschritt geprüft:

| Zeitpunkt der Probennahme | -1,1 ppm* LiBF₄ | 0 ppm* BF₃ | 3,1 ppm* LiDFOB | 7,6 ppm* LiBOB |
|---|---|---|---|---|
| 1 h 70°C | 19 | 0,4 | 68 | 13 |
| 2 h 70°C | 15 | 0,5 | 74 | 11 |
| 9 h 70°C | 9 | 1 | 86 | 4 |

| | | | | |
|---|---|---|---|---|
| * angegeben ist die chemische Verschiebung des jeweiligen Produkts im ¹¹B-NMR-Spektrum | | | | |

### Beispiel 5: Herstellung von LiDFOB aus LiBOB, Lithiumfluorid und BF₃ in Tetrahydropyran (THP) ohne Katalysator

In einem inertisierten GC-Septumglas mit Magnetrührkern wurden 1,50 g LiBOB und 0,25 g gemahlenes Lithiumfluorid in 8,5 g THP gelöst bzw. suspendiert. Zur gerührten Suspension wurden 1,10 g Bortrifluorid-Etherat zugespritzt und dann auf 70°C erwärmt. In bestimmten zeitlichen Abständen wurden Proben entnommen und per ¹¹B-NMR auf Reaktionsfortschritt geprüft:

| Zeitpunkt der Probennahme | -1,1 ppm* LiBF₄ | 0 ppm* BF₃ | 3,1 ppm* LiDFOB | 7,6 ppm* LiBOB |
|---|---|---|---|---|
| 15 min 70°C | 28 | 0 | 47 | 25 |
| 2 h 70°C | 16 | 0,5 | 79 | 4 |

| | | | | |
|---|---|---|---|---|
| * angegeben ist die chemische Verschiebung des jeweiligen Produkts im ¹¹B-NMR-Spektrum | | | | |

### Beispiel 6: Herstellung von LiDFMB aus Lithium-bis(malonato)borat (LiBMB), Lithiumfluorid und BF₃ in Propylencarbonat (PC) ohne Katalysator

In einem inertisierten GC-Septumglas mit Magnetrührkern wurden 1,78 g LiBMB und 0,21 g Lithiumfluorid in 11g PC suspendiert. Zur gerührten Suspension wurden 1,14 g Bortrifluorid-Etherat zugespritzt und dann bei 100°C gerührt. In bestimmten zeitlichen Abständen wurden Proben entnommen und per ¹¹B-NMR auf Reaktionsfortschritt geprüft:

| Zeitpunkt der Probennahme | -1,2 ppm* LiBF₄ | 0 ppm* BF₃ | 1,4 ppm* LiDFMB | 3,6 ppm* LiBMB |
|---|---|---|---|---|
| 30 min 100°C | 29 | 4 | 54 | 11 |
| 2,5 h 100°C | 29 | 4 | 61 | 5 |
| 7 h 100°C | 24 | 3 | 70 | 3 |

| | | | | |
|---|---|---|---|---|
| * angegeben ist die chemische Verschiebung des jeweiligen Produkts im ¹¹B-NMR-Spektrum | | | | |

### Beispiel 7: Herstellung von LiDFMB aus Lithium-bis(malonato)borat (LiBMB), Lithiumfluorid und BF₃ in Dimethylsulfoxid (DMSO) ohne Katalysator

In einem inertisierten GC-Septumglas mit Magnetrührkern wurden 1,78 g LiBMB und 0,21g Lithiumfluorid in 10,5g DMSO gelöst bzw. suspendiert. Zur gerührten Suspension wurden 1,14g Bortrifluorid-Etherat zugespritzt und dann bei 100°C gerührt. Schon nach kurzer Zeit bildete sich eine fast klare Reaktionslösung. In bestimmten zeitlichen Abständen wurden Proben entnommen und per ¹¹B-NMR auf Reaktionsfortschritt geprüft:

| Zeitpunkt der Probennahme | -1,2 ppm* LiBF₄ | 0 ppm* BF₃ | 1,4 ppm* LiDFMB | 3,6 ppm* LiBMB |
|---|---|---|---|---|
| 30 min 100°C | 19 | 2 | 45 | 34 |
| 2,5 h 100°C | 11 | 0,9 | 67 | 20 |
| 7 h 100°C | 6 | ca. 0 | 83 | 11 |

| | | | | |
|---|---|---|---|---|
| * angegeben ist die chemische Verschiebung des jeweiligen Produkts im ¹¹B-NMR-Spektrum | | | | |

## Patentansprüche

1. Verfahren zur Herstellung von Metalldifluoroboraten der allgemeinen Formel 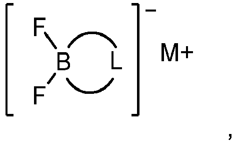 wobei M⁺ ein einwertiges Kation ist, ausgewählt aus der Gruppe Lithium, Natrium, Kalium oder Ammonium NR₄⁺, wobei R = H, Alkyl (C1 bis C8) und
L ein Chelatbildner ist mit zwei endständigen Sauerstoffatomen mit der allgemeinen Formel 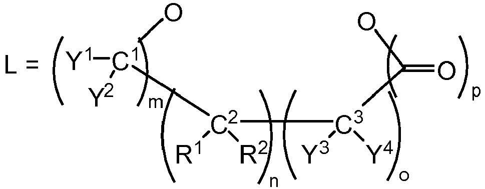 wobei gilt:
wenn m = 1 und Y¹ und Y² zusammen mit C¹ eine Carbonylgruppe bedeuten, sind n = 0 oder 1 und o = 0 oder 1 mit R¹ und R² unabhängig voneinander H oder Alkyl mit ein bis acht Kohlenstoffatomen (C1-C8) sowie Y³, Y⁴ jeweils unabhängig voneinander OR³ (R³ = C1-C8-Alkyl), dann gilt für n oder o ≠ 1: p = 0 oder 1 und für n und o = 0 gilt p = 1;
oder
Y¹, Y², Y³, Y⁴ bedeuten jeweils unabhängig voneinander OR³ (R³ = C1-C8-Alkyl), m = 1, n = 0 oder 1, o = 1 und p = 0;
oder
C² und C³ sind Glieder eines 5- oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei R¹, R², Y³ und Y⁴ entfallen, m = 0 oder im Falle von 1 bedeuten Y¹ und Y² zusammen mit C¹ eine Carbonylgruppe und p ist 0 oder 1, durch Umsetzung von eines Metall-bis(chelato)borats der Formel M[BL₂] mit Bortrifluorid sowie einem Metallfluorid (MF) und/oder einem Metallsalz des Chelatliganden (M₂L) in einem organischen, aprotischen Lösungsmittel.

2. Verfahren nach Anspruch 1, **dadurch gekennzeichnet, dass** M⁺ = Li⁺ und L = C₂O₄²⁻ (Oxalat) oder C₃H₂O₄²⁻ (Malonat) ist und dass als Produkte Lithiumdifluorooxalatoborat (LiDFOB) oder Lithiumdifluoromalonatoborat (LiDFMB) gewonnen werden.

3. Verfahren nach Anspruch 1 oder 2, **dadurch gekennzeichnet, dass** als Lösungsmittel Ether, Ester, Nitrile, Lactone, Alkyl-Carbonate, entweder in reiner Form oder in beliebiger Mischung eingesetzt werden.

4. Verfahren nach Anspruch 1 bis 3, **dadurch gekennzeichnet, dass** als Lösungsmittel bevorzugt Kohlensäureester (Dimethylcarbonat, Diethylcarbonat, Ethylmethylcarbonat, Propylencarbonat, Ethylencarbonat), cyclische Ether wie Tetrahydropyran oder Tetrahydrofuran, Polyether wie 1,2-Dimethoxyethan oder Diethylenglykoldimethylether, ferner Nitrile wie Acetonitril, Adiponitril, Malodinitril, Glutaronitril sowie Lactone wie Y-Butyrolacton eingesetzt werden.

5. Verfahren nach Anspruch 1 bis 4, **dadurch gekennzeichnet, dass** die Umsetzung bei Temperaturen von 0 bis 250°C, vorzugsweise von 20 bis 150°C und bevorzugt von 30 bis 130°C durchgeführt wird.

6. Verfahren nach Anspruch 1 bis 5, **dadurch gekennzeichnet, dass** die schwerlöslichen Einsatzstoffe, also die Metallfluoride und/oder Metallchelatsalze, in pulverisierter Form, vorzugsweise vermahlen, eingesetzt werden.

7. Verfahren nach Anspruch 1 bis 6, **dadurch gekennzeichnet, dass** die mittlere Partikelgröße der schwerlöslichen Einsatzstoffe < 100 µm und vorzugsweise < 50 µm liegt.

8. Verfahren nach Anspruch 1 bis 7, **dadurch gekennzeichnet, dass** die Metallsalze MF und/oder M₂L im Überschuss eingesetzt werden.

9. Verfahren nach Anspruch 1 bis 8, **dadurch gekennzeichnet, dass** die Metallsalze MF und/oder M₂L mit 0,1 bis 100 Gew.-% Überschuss, vorzugsweise mit 1 bis 20 Gew.- % Überschuss eingesetzt werden.

10. Verfahren nach Anspruch 1 bis 9, **dadurch gekennzeichnet, dass** ein Katalysator zur Reaktionsbeschleunigung eingesetzt wird.

11. Verfahren nach Anspruch 1 bis 10, **dadurch gekennzeichnet, dass** der Katalysator eine Lewis-Säure oder einen Stoff, der in der Reaktionsmischung eine Lewissäure freisetzen kann, enthält oder daraus besteht.

12. Verfahren nach Anspruch 1 bis 11, **dadurch gekennzeichnet, dass** als Katalysator Elementverbindungen der 2. - 15. Gruppe des Periodensystems, vorzugsweise molekulare Halogenide, Perfluoroalkyle, Perfluoroaryle und/oder Oxoverbindungen des Bors, Aluminiums und Phosphors, vorzugsweise Aluminiumalkoholate (Al(OR)₃), Borsäureester (B(OR)₃), Phosphoroxide oder Phosphorhalogenide eingesetzt werden.

13. Verfahren nach Anspruch 1 bis 12, **dadurch gekennzeichnet, dass** als Katalysator LiPF₆ eingesetzt wird.

14. Verfahren nach Anspruch 1 bis 13, **dadurch gekennzeichnet, dass** der Katalysator in Mengen von höchstens 20 mol-%, bevorzugt bis 10 mol-% und besonders bevorzugt bis 5 mol-%, bezogen auf eingesetztes Bortrifluorid, verwendet wird.

## Claims

1. A method for preparing metal difluoroborates of the general formula 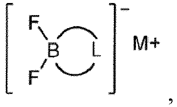 wherein M⁺ is a monovalent cation selected from the group lithium, sodium, potassium, or ammonium NR₄⁺, wherein R = H, alkyl (C1 to C8), and
L is a chelating agent having two terminal oxygen atoms with the general formula 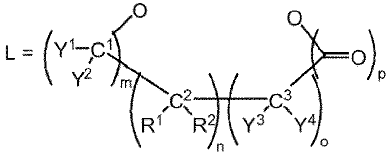 wherein:
when m = 1 and Y¹ and Y² together with C¹ stand for a carbonyl group, n = 0 or 1 and o = 0 or 1, and R¹ and R² are each independently H or alkyl with one to eight carbon atoms (C1-C8), and Y³, Y⁴ are each independently OR³ (R³ = C1-C8 alkyl), then when n or o ≠ 1: p = 0 or 1, and when n and o = 0, p = 1;
or
Y¹, Y², Y³, Y⁴ are each independently OR³ (R³ = C1-C8 alkyl), m = 1, n = 0 or 1, o = 1, and p = 0;
or
C² and C³ are members of a 5- or 6-membered aromatic or heteroaromatic ring (with N, O, or S as heteroelement) which may optionally be substituted with alkyl, alkoxy, carboxy, or nitrile, wherein R¹, R², Y³, and Y⁴ are absent, m = 0, or in the case of 1, Y¹ and Y² together with C¹ stand for a carbonyl group, and p is 0 or 1, by reaction of a metal bis(chelato)borate of the formula M[BL₂] with boron trifluoride and a metal fluoride (MF) and/or a metal salt of the chelate ligand (M₂L) in an organic, aprotic solvent.

2. The method according to claim 1, **characterized in that** M⁺ = Li⁺ and L = C₂O₄²⁻ (oxalate) or C₃H₂O₄²⁻ (malonate) and **in that** lithium difluorooxalatoborate (LiDFOB) or lithium difluoromalonato borate (LiDFMB) are obtained as products.

3. The method according to claim 1 or 2, **characterized in that** ethers, esters, nitriles, lactones, alkyl carbonates, either in pure form or in any mixture are used as solvents.

4. The method according to any one of claims 1 to 3, **characterized in that** preferably carbonic acid ester (dimethyl carbonate, diethyl carbonate, ethyl methyl carbonate, propylene carbonate, ethylene carbonate), cyclic ethers such as tetrahydropyran or tetrahydrofuran, polyethers such as 1,2-dimethoxyethane or diethylene glycol dimethyl ether, further nitriles such as acetonitrile, adiponitrile, malononitrile, glutaronitrile and lactones such as γ-butyrolactone are used as solvent.

5. The method according to any one of claims 1 to 4, **characterized in that** the reaction is carried out at temperatures from 0 to 250 °C, preferably from 20 to 150 °C and preferably from 30 to 130 °C.

6. The method according to any one of claims 1 to 5, **characterized in that** the sparingly soluble starting materials, i.e. the metal fluorides and/or metal chelate salts are used in pulverized form, preferably ground.

7. The method according to any one of claims 1 to 6, **characterized in that** the mean particle size of the sparingly soluble starting materials is < 100 µm and preferably < 50 µm.

8. The method according to any one of claims 1 to 7, **characterized in that** the metal salts MF and/or M₂L are used in excess.

9. The method according to any one of claims 1 to 8, **characterized in that** the metal salts MF and/or M₂L are used with 0.1 to 100 wt.% excess, preferably 1 to 20 wt.% excess.

10. The method according to any one of claims 1 to 9, **characterized in that** a catalyst is used to accelerate the reaction.

11. The method according to any one of claims 1 to 10, **characterized in that** the catalyst contains or consists of a Lewis acid or a substance that can release a Lewis acid in the reaction mixture.

12. The method according to any one of claims 1 to 11, **characterized in that** element compounds of Groups 2 through 15 of the periodic table, preferably molecular halides, perfluoroalkyls, perfluoroaryls and/or oxo compounds of boron, aluminum and phosphorus, preferably aluminum alcoholates (Al(OR)₃), boric acid esters (B(OR)₃), phosphorus oxides or phosphorus halides are used as catalyst.

13. The method according to any one of claims 1 to 12, **characterized in that** LiPF₆ is used as catalyst.

14. The method according to any one of claims 1 to 13, **characterized in that** the catalyst is used in quantities of at most 20 mol-%, preferably up to 10 mol-% and particularly preferably up to 5 mol-%, based on the boron trifluoride used.

## Revendications

1. Procédé de production de difluoroborates métalliques de formule générale 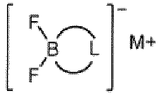 dans lequel M⁺ est un cation monovalent, choisi dans le groupe lithium, sodium, potassium ou ammonium NR₄⁺, dans lequel R = H, alkyle (en C1 à C8) et
L est un agent chélatant comprenant deux atomes d'oxygène terminaux de formule générale 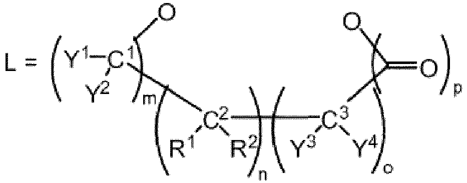 dans lequel :
si m = 1 et Y¹ et Y² représentent conjointement avec C¹ un groupe carbonyle, alors n = 0 ou 1 et o = 0 ou 1, R¹ et R² représentant indépendamment les uns des autres H ou un alkyle ayant un à huit atomes de carbone (C1-C8) et Y³, Y⁴ respectivement indépendamment les uns des autres OR³ (R³ = alkyle en C1-C8), alors pour n ou o ≠ 1 : p = 0 ou 1 et pour n et o = 0, p = 1 ;
ou
Y¹, Y², Y³, Y⁴ représentent respectivement indépendamment les uns des autres OR³ (R³ = alkyle en C1-C8), m= 1, n= 0 ou 1, o = 1 etp = 0;
ou
C² et C³ sont des chaînons d'un cycle aromatique ou hétéro-aromatique de 5 ou 6 chaînons (avec N, O ou S comme hétéro-élément), qui peut être substitué le cas échéant par alkyle, alcoxy, carboxy ou nitrile, dans lequel R¹, R², Y³ et Y⁴ ne sont pas présents, m = 0 ou dans le cas de 1, Y¹ et Y² représentent conjointement avec C¹ un groupe carbonyle et p est 0 ou 1, par conversion d'un *bis*(chélato)borate métallique de formule M[BL₂] avec du trifluorure de bore et d'un fluorure métallique (MF) et/ou d'un sel métallique du ligand chélatant (M₂L) dans un solvant organique aprotique.

2. Procédé selon la revendication 1, **caractérisé en ce que** M⁺ = Li⁺ et L = C₂O₄²⁻ (oxalate) ou C₃H₂O₄²⁻ (malonate) et que l'on obtient du difluorooxalatoborate de lithium (LiDFOB) ou du difluoromalonatoborate de lithium (LiDFMB) comme produits.

3. Procédé selon la revendication 1 ou 2, **caractérisé en ce que** l'on met en oeuvre des éthers, esters, nitriles, lactones, carbonates d'alkyle, soit sous forme pure soit en mélange quelconque, comme solvant.

4. Procédé selon la revendication 1 à 3, **caractérisé en ce que** l'on met en oeuvre comme solvant de préférence des esters d'acide carboxylique (carbonate de diméthyle, carbonate de diéthyle, carbonate d'éthylméthyle, carbonate de propylène, carbonate d'éthylène), des éthers cycliques comme le tétrahydropyrane ou le tétrahydro-furane, des polyéthers comme le 1,2-diméthoxyéthane ou l'éther diméthylique de diéthylène glycol, également des nitriles tels que l'acétonitrile, l'adiponitrile, le malodinitrile, le glutaronitrile et des lactones telles que la γ-butyrolactone.

5. Procédé selon la revendication 1 à 4, **caractérisé en ce que** la conversion s'effectue à des températures de 0 à 250 °C, de préférence de 20 à 150 °C, et de préférence de 30 à 130 °C.

6. Procédé selon la revendication 1 à 5, **caractérisé en ce que** les matières premières difficilement solubles, c'est-à-dire les fluorures métalliques et/ou les sels chélatants métalliques, sont mises en oeuvre sous forme pulvérisée, de préférence broyée.

7. Procédé selon la revendication 1 à 6, **caractérisé en ce que** la taille moyenne de particule des matières premières difficilement solubles est < 100 µm et de préférence < 50 µm.

8. Procédé selon la revendication 1 à 7, **caractérisé en ce que** l'on met en oeuvre les sels métalliques MF et/ou M₂L en excédent.

9. Procédé selon la revendication 1 à 8, **caractérisé en ce que** l'on met en oeuvre les sels métalliques MF et/ou M₂L avec 0,1 à 100 % en poids d'excédent, de préférence avec 1 à 20 % en poids d'excédent.

10. Procédé selon la revendication 1 à 9, **caractérisé en ce que** l'on met en oeuvre un catalyseur pour accélérer la réaction.

11. Procédé selon la revendication 1 à 10, **caractérisé en ce que** le catalyseur contient ou se compose d'un acide de Lewis ou d'une substance qui peut libérer un acide de Lewis dans le mélange de réaction.

12. Procédé selon la revendication 1 à 11, **caractérisé en ce que** l'on met en oeuvre comme catalyseur des composés élémentaires des 2^{e} à 15^{e} groupes du système périodique des éléments, de préférence des halogénures moléculaires, des perfluoroalkyles, des perfluoroaryles et des composés oxo du bore, de l'aluminium et du phosphore, de préférence des alcoolates d'aluminium (Al(OR)₃), des esters d'acide borique (B(OR)₃), des oxydes phosphoriques ou des halogénures phosphoriques.

13. Procédé selon la revendication 1 à 12, **caractérisé en ce que** l'on met en oeuvre du LiPF₆ comme catalyseur.

14. Procédé selon la revendication 1 à 13, **caractérisé en ce que** le catalyseur est utilisé en des quantités de 20 % en moles au maximum, de préférence jusqu'à 10 % en moles et de manière particulièrement préférée jusqu'à 5 % en moles, par rapport au trifluorure de bore mis en oeuvre.
